# EUROPEAN PATENT SPECIFICATION

(11) **EP 3 549 689 B1**
(45) Date of publication and mention of the grant of the patent: **11.05.2022**
(21) Application number: 19164415.2
(22) Date of filing: 21.03.2019
(51) Int. Cl.: B21C 37/08, B21C 37/083, B21C 47/24, B21C 49/00, B21C 51/00, B23K 9/025, B23D 25/04, B23K 11/087

(54) **STRIP PROFILING LINE COMPRISING A CUTTING DEVICE**
BANDPROFILIERANLAGE MIT EINER SCHNEIDVORRICHTUNG
LIGNE DE PROFILAGE D'UNE BANDE COMPRENANT UN DISPOSITIF DE COUPAGE

(30) Priority: 22.03.2018 IT 201800003894
(43) Date of publication of application: 09.10.2019
(73) Proprietor: FIVES OTO S.P.A., 42022 Boretto, Reggio Emilia (IT)
(72) Inventor: ANESI, Andrea, 42049 SANT'ILARIO D'ENZA (REGGIO EMILIA) (IT)
(74) Representative: Casadei, Giovanni

(56) References cited:
- EP-A1- 0 158 979
- AU-A- 1 013 100
- DE-A1- 2 604 324
- DE-A1- 2 606 313
- DE-A1-102010 024 034
- JP-A- H11 123 451
- JP-A- H11 254 029
- JP-A- S60 170 582
- JP-A- 2000 301 230
- US-A- 3 994 191

## Description

The present invention relates to a high efficiency profiling line for producing welded pipes.

A profiling line allows longitudinally welded pipes to be produced. The pipes are obtained by gradually bending a steel strip about a longitudinal axis, until the longitudinal edges are brought into contact that are welded to each other according to different processes (HF, Laser, TIG, etc...). The pipe thus obtained is cut into sections of a predetermined length using a shearing machine and guided towards an evacuation and discharge line. The whole production is performed in a continuous line.

A profiling line substantially comprises a series of forming assemblies, predisposed for progressively bending the strip of metallic material about a longitudinal axis thereof until they confer thereon a tubular conformation. The bending of the sheet is done by passing the sheet itself between the rollers of the various forming assemblies which, by contact, progressively deform it. The strip slides continuously through the forming assemblies, being progressively deformed.

The starting material of the line comprises a metal strip, with a predefined width, wound in a spiral about a feeder device, known as an uncoiler, which unwinds it continuously feeding the line itself.

Machines of this type are normally inserted in production lines for welded pipes. Such lines allow the continuous production of pipes starting from reels of strips, made of steel or other materials, with a predefined width. The strip has a width about equal to the circumference or in general to the peripheral extension of the pipe to be realised, and is collected on a reel positioned at the start of the line on an uncoiler. After a passage of the strip through a pinch-roll and a straightener that aims to remove the curvature of the strip or to correct any imperfections thereof, the strip reaches a joining station in which the tail of the reel present in profiling is joined by welding with the head of the new following strip. The strip is then wound onto an accumulator that allows the necessary time to be absorbed for joining the reels and allowing the subsequent loading cycle to be performed continuously without ever stopping the production line downstream of the accumulator. From the accumulator, the strip passes to the profile mill where, by means of a series of forming heads, it is bent longitudinally until it assumes the shape of a pipe that is closed with a longitudinal weld performed along the generatrix of the pipe itself at which the side edges of the strip are brought into contact. Once the welding excesses are removed, still by means of continuous processing through a detachment section (removal of the welding bead), and after transiting through a calibrating and straightening section, or calibrating, squaring and straightening section in the case of square or rectangular profiles, the pipe reaches the cutting machine, where it is cut transversally into a series of pipes of a predefined length based on production requirements.

The starting strip has a predefined width that depends on the shape of the section of the pipe to be realised. In cases in which a format change is envisaged for the pipe to be produced or, in general, when a new strip with a different thickness and/or width needs to be fed, the end section of the strip being produced is joined, through an end weld, to the initial section of the new strip, so that the latter moves towards the profiling line drawn by the strip being produced.

The joining zone between the two strips and the strip corresponding to the new reel that follows, in most cases, cannot be processed in the same way as the strip present in the machine. In particular, the joint and the material of the new reel (for the new production) cannot pass through the forming assemblies as on most occasions the use of different tools (forming rollers) is envisaged. The joint must therefore be stopped prior to entering the profiling machine and cut so as to free the system from the strip present in the machine, in order to allow the change of tools and the feeding of the head of the new strip.

For that purpose, when the joint is close to the inlet of the forming assemblies, the system is stopped and the strip is stopped. Subsequently, an operator manually cuts the joint zone, e.g. through plasma cutting, to allow the emptying of the line. At this point the new strip remains stationary upstream of the forming assemblies, while the strip of the old or previous production is advanced so as to empty the system, normally manually in jog mode.

The whole strip left in the profile mill between the joint cutting position and the welder must be rejected, as the stopping and subsequent restarting require handling that does not guarantee suitable conditions for realising a product of sufficient quality especially as regards the weld. The pipe therefore remains open and, as well as having to be rejected, it also damages the blades of the shearing machine which has to split the pipe so as to allow the disposal thereof.

Furthermore, the end section of the discharge pipe, or "tail", is very difficult to extract especially when the "tail" passes beyond the calibrating zone, where there is still a sufficient thrust force of the material. In many cases, the extraction is therefore performed using the vices of the shearing machine as a traction element. Such vices, which are not designed for this function, can suffer damage and deformation. This problem is more clear in the event of producing square and rectangular profiles as, downstream of the calibrating section, there is a squaring and straightening section that envisages the passage through four or five groups of idler rollers, i.e. free from motorisation. There is an operating difficulty, related to traditional squaring sections, hence it is inconvenient for the operator to open them to allow the passage of material, avoiding the deformation process which, inherently, absorbs energy and generates a reaction that opposes the extraction action.

An example of prior art profiling line according to the preamble of claim 1 is disclosed in document JPS60170582. Such profiling line can be improved in several aspects especially in extraction of the tail of the pipe from the line.

The object of the present invention is that of offering a high efficiency profiling line that allows the drawbacks of current profiling lines previously described to be overcome. This object is achieved by a profiling line as defined in claim 1.

An advantage of the profiling line according to the present invention is that it allows the waste material due to the joining of two strips to be drastically reduced.

Another advantage of the profiling line according to the present invention is that it allows downtime due to a strip change to be reduced.

A further advantage of the profiling line according to the present invention is that it eliminates the need to use the shearing machine incorrectly or in demanding conditions.

Further characteristics and advantages of the present invention will become more apparent in the following detailed description of an embodiment of the present invention, illustrated by way of non-limiting example in the attached figures, wherein:
- figure 1 shows a schematic and vertical elevation view of a first section of the profiling line according to the present invention;

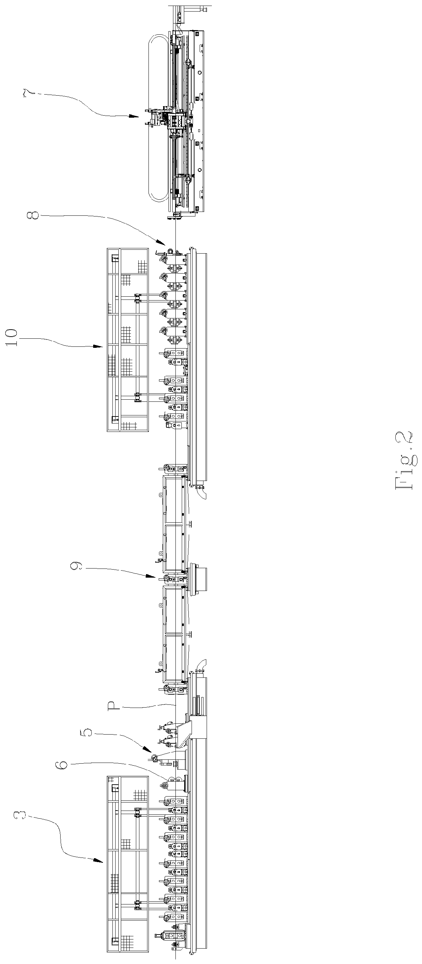

- figure 2 shows a schematic and vertical elevation view of a second section of the profiling line according to the present invention;

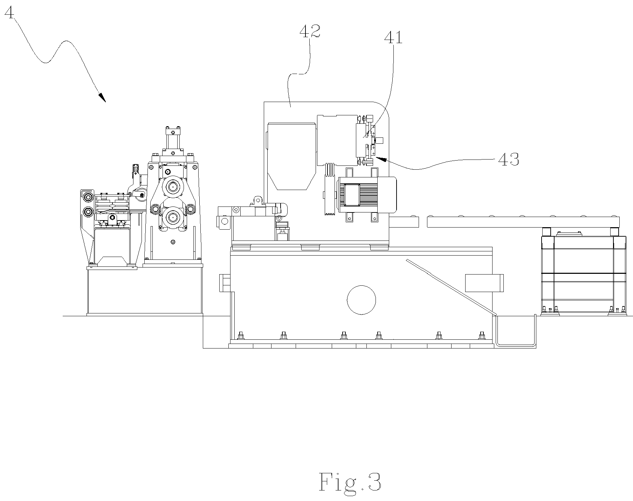

- figure 3 shows a device being part of the line of figure 1;

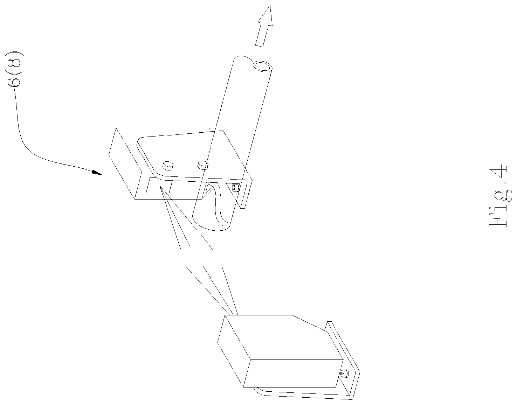

- figure 4 shows a second device being part of the line of figure 2;

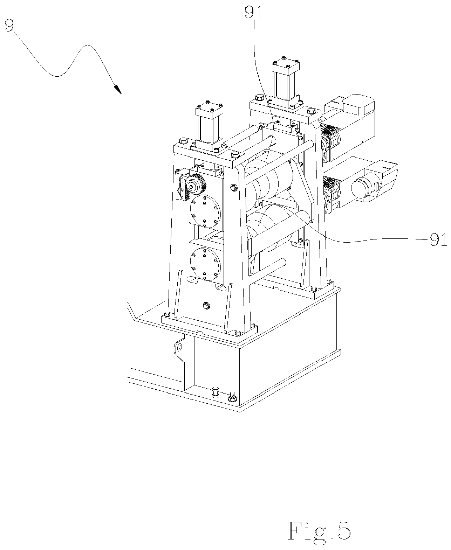

- figure 5 shows a third device being part of the line of figure 2.

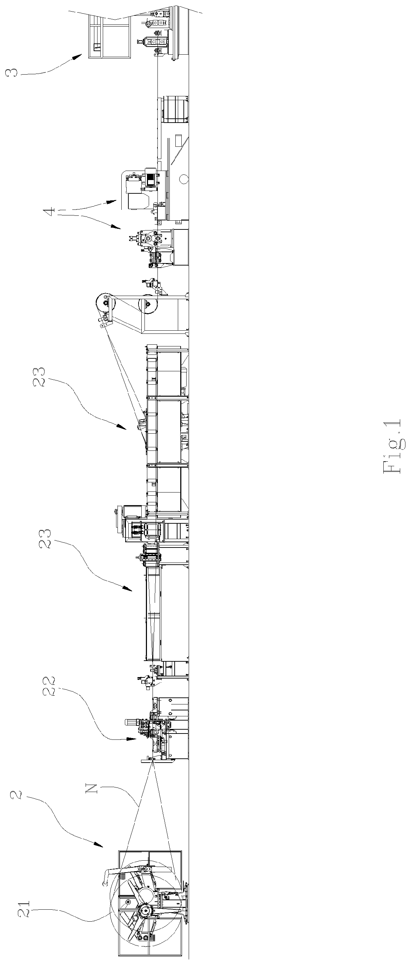

With reference to the general diagram of figure 1, the profiling line according to the present invention comprises a feeder device (2). The feeder device (2) can assume different configurations. In a possible embodiment, the feeder device (2) is provided with a rotating support (21) for a reel of strip or coil (N). The feeder device (2), known in the sector, is substantially arranged to accumulate a predetermined section of strip (N) wound in a spiral, onto the rotating support (21). The latter is provided with the possibility to vary its outer diameter, in a known way in the sector, so as to be able to feed the strip (N) at constant speed and tension. In an alternative embodiment, the feeder device (2) comprises two or more rectilinear panels on which two or more strips are welded together.

The joint between the initial end of a new strip and the final end or tail of the strip being processed can be performed downstream of the feeder device (2).

In the advancement direction of the strip (N), the feeder device (2) is followed by a joining device (22), predisposed to perform the head weld between the initial end of a new strip and the final end or tail of the strip being processed. To allow the head weld to be performed, the profiling line comprises an accumulation section (23), arranged downstream of the joining device (22). In a known way in the sector, the accumulation section (23) is provided with a means that allows a predetermined length of strip to be collected, which allows the line to be fed without interruption during the time necessary for performing the head weld, i.e. while the tail of the strip remains stationary to allow the weld to be performed.

Both the joining device (22), and the accumulation section (23) are known in the sector, and therefore will not be described in further detail.

The profiling line further comprises a forming assembly (3), arranged downstream of the feeder device (2). The forming assembly comprises a plurality of forming assemblies, known in the sector, which are structured to longitudinally bend the strip (N) into a pipe (P). Each forming assembly, or cage, comprises at least two profiling rollers. As is known, the forming of the pipe (P) takes place by passing the strip (N) between the rollers of various cages which, by contact, progressively deform it. The strip slides continuously through the cages, being progressively deformed.

Downstream of the forming assembly (3), the profiling line comprises a welding device (5) which, in a known way in the sector, longitudinally seals the edges of the strip (N), for realising the closure of the pipe (P).

In current profiling lines, the joint between two consecutive strips, with the same or a different width, proceeds towards the forming assembly. As already mentioned, the joint cannot be left to pass through the rollers of the forming assembly when a tool (3) change is required. The strip (N) is therefore stopped in proximity to the profiling machine, and with it the entire profiling line, to allow the joint to be cut, which is normally performed manually by an operator through a relevant tool, with all the consequent safety risks. The stopping of the strip (N) also implies the stopping of the welding device (5) and the consequent discarding of the whole section of pipe (P) comprised in the forming assembly (3), i.e. comprised between the joint and the welding machine, which cannot be closed and welded correctly to obtain a top quality product.

Advantageously, the profiling line according to the present invention comprises a cutting device (4), arranged between the feeding device (2) and the forming assembly (3), which is equipped with a mobile cutting head (41) structured to translate in synchrony with the strip (N) along an operative stroke, and to cut the strip (N) as it advances at a predetermined speed in proximity to the joint. In the embodiment represented, the cutting device (4) is arranged between the accumulation section (23) and the forming assembly (3).

In substance, the cutting device (4) performs a cut on the fly of the strip (N), while the latter advances at the production speed of the profiling line. The strip (N) does not therefore need to be stopped to allow the cutting of the joint.

In particular, the cutting device (4) allows the tail of the strip (N) being processed to be cut at a certain distance from the joint, leaving the joint attached to the head of the new strip, upstream of the forming assembly (3). The strip (N) being processed can therefore advance along the profiling line at the envisaged processing speed, while the new strip, with the joint at the head, is stopped to allow the complete removal of the joint. The longitudinal welding of the pipe (P) can therefore be performed correctly up to the tail of the strip (N).

In a possible embodiment, the cutting head (41) is associated to a carriage which can travel parallel to the strip (N) in a forward and return movement. The cut is made during a section of the forwards stroke of the carriage, during which the carriage travels at the same speed as the strip (N). Once the cut is finished, the carriage inverts its motion and performs a return stroke after which it returns to an initial position.

The carriage that supports the cutting head (41) is controlled by a driving means, not illustrated in detail being known to a person skilled in the art, which imposes an alternative linear motion along a parallel direction with respect to the longitudinal advancement direction of the strip (N). The motion substantially takes place between an initial position and a final position and comprises a forwards direction, from the initial position to the final position, at least one section of which takes place in synchrony with the advancement of the strip (N) and during which the strip (N) is cut, and a return direction, following which the carriage returns to the initial position.

A cutting cycle starts from the initial position with the carriage retracted towards the accumulator. From the initial position, the cutting carriage accelerates until it reaches the advancement speed of the strip (N). After reaching such speed, the carriage moves in synchrony with the strip (N) and the cutting head (41) starts to cut the strip (N), which takes place in synchrony and during the advancement of the latter. After cutting, the carriage slows down until the direction of its motion is inverted at the final position. From this point, the carriage starts the return stroke which takes place at a constant speed with an initial acceleration and a final deceleration, to return to the initial position.

The profiling line according to the present embodiment comprises a first end sensor (6) arranged upstream of the welding device (5) and predisposed to detect the tail end of the pipe (P).

The first sensor (6) is predisposed to send a signal when it detects the tail end of the pipe (P) to a control module which, after a predetermined period of time, as a function of the strip speed, stops the welding device (5). This allows, for example, the welding device (5) to be stopped before the passage of the tail end of the pipe (P), so that the welder is not operating in the absence of material to be welded (P). Furthermore, the detection of the tail of the pipe (P) can be used as a consent signal for a plurality of automated actions that can only take place in the absence of the pipe (P), such as stopping the motion of the cages of the forming assembly (3), distancing or removing protection barriers along the forming assembly (3) and starting various maintenance and/or replacement operations of parts in view of a format change of the pipe (P). For example, one or more forming assemblies can be provided with automatic anchoring means, to the ground or to a base, which can be disengaged or unlocked automatically following the processing of the signal sent by the first sensor (6). Furthermore, the signal of the first sensor (6) can be used to control the driving of an automatic bridge crane or a change robot, predisposed to remove one or more forming assemblies and to reposition one or more different forming assemblies.

The profiling line further comprises a shearing device (7), arranged downstream of the welding device and predisposed to cut the pipe (P) into sections of predetermined length. The shearing device (7), in a known way in the sector, comprises a mobile cutting head, in order to perform a cut "on-the-fly" of the pipe (P), in the same way as the cut performed by the cutting device (4). In substance, the cutting head of the shearing device (7) is associated to a carriage which can travel parallel to the pipe (P) in a forward and return movement without stopping. The cut is made during a section of the forwards stroke of the carriage, during which the carriage travels at the same speed as the pipe (P). After the cut, the carriage inverts its motion and performs a return stroke after which it rises again along the pipe (P), which in the meantime continues to travel at the envisaged production speed, to return to an initial position from which to start again immediately to perform a new cut.

The carriage that supports the cutting head is controlled by a driving means, not illustrated in detail being known to a person skilled in the art, which imposes an alternative linear motion along a parallel direction with respect to the longitudinal advancement direction of the pipe (P). The motion substantially takes place without stopping between an initial position and a final position and comprises a forwards direction, from the initial position to the final position, at least one section of which takes place in synchrony with the pipe (P) and during which the pipe (P) is cut, and a return direction, following which the carriage returns to the initial position.

A cutting cycle starts from the initial position of the carriage. From the initial position, the cutting carriage accelerates until it reaches the advancement speed of the pipe (P). After reaching such speed, the carriage moves in synchrony with the pipe (P) and the cutting head (41) starts to cut the pipe (P), which takes place during the advancement of the latter. After cutting, the carriage slows down until the direction of its motion is inverted at the final position. From this point the carriage immediately starts the return stroke which takes place at a constant speed with an initial acceleration and a final deceleration, to reach the initial position at exactly the time in which it must restart for a new forwards stroke and perform a new shearing operation of a predefined length of pipe.

Between the welding device (5) and the shearing device (7), the profiling line comprises a calibrating section (10). As is known in the sector, the calibrating section (10) comprises a plurality of calibrating assemblies, each of which comprises at least two profiling rollers whose profile reproduces the outer section of the pipe (P). The calibrating assemblies, in substance, redefine the profile of the pipe, giving it the desired size and shape. As is known, the calibration takes place by passing the pipe (P) between the rollers of various calibrating units which, by contact, gradually deform it and give it precise measurements.

Advantageously, the profiling line according to the present embodiment comprises a second end sensor (8) arranged upstream of the shearing device (7) and predisposed to detect the tail end of the pipe (P). Preferably, but not necessarily, the second sensor (8) is arranged upstream of the calibrating section (10). The second sensor (8) is predisposed to send a signal when it detects the tail end of the pipe (P) to a control module which drives the shearing device (7) for cutting a tail section of a predefined length of the pipe (P). Thanks to the presence of the second sensor (8) it is possible, for example, to drive the shearing device so as to cut the pipe (P) in a section in which the weld is present. This allows the cutting tools to be protected from impact and damage which could occur if the cut is performed in the area of the tail of the pipe (P) in which there is no weld. This risk is rather frequent in current profiling lines, without a sensor to detect the tail end of the pipe (P). In fact, in the absence of any information in relation to the position of the tail end of the pipe (P), the shearing device (7) could be activated on a section in which the weld is absent or incomplete.

The detection of the tail of the pipe (P), performed by the second sensor (8), can be used as a consent signal for a plurality of automated actions that can only take place in the absence of the pipe (P) such as, for example, the stopping of the calibrating section (10), the distancing or removal of protective barriers along the calibrating stretch (10), the disengagement of the speed reading probe of the pipe that is used as a signal for calculating the trajectory of the carriage of the flying shear (which from that moment on will no longer act in feedback but on speed reference provided by the extraction pinch-roll motor), the automatic opening of the passages of the squaring section (in technical jargon "Turkish heads") which, being idle and therefore not motorised, would generate a drawing reaction opposite to the extraction action, and the starting of various maintenance and/or replacement operations of parts in view of a format change of the pipe (P). Furthermore, as in the case of the forming assembly (3), one or more calibrating assemblies can be provided with automatic anchoring means to the floor or to a base that can be disabled following the signal sent by the second sensor (8). Furthermore, the signal of the second sensor (8) can be used to control the driving of an automatic bridge crane or a robot, predisposed to remove one or more calibrating assemblies and to reposition one or more different calibrating assemblies.

To facilitate cutting in the tail end zone of the pipe (P), the profiling line according to the present invention comprises one or more extracting devices (9), arranged upstream of and/or on board and/or downstream of the shearing device (7), each of which can be equipped with at least one motorised roller (91) placed in contact with the pipe (P) to push the pipe (P) forwards. This makes it possible to prevent, as happens in current profiling lines, the use of the shearing device (7) as a traction means of the pipe (P). In fact, it can occur that the tail section of the pipe (P) is of an insufficient length so as to be correctly pushed forward by the calibrating section (10). In such cases, in current lines the tail section of the pipe (P) is constrained to the cutting head of the shearing device, using the cutting vice present. Subsequently, the cutting head is activated to slide in order to pull the tail section of the pipe (P). This can cause damage to the shearing device (7), which is not designed for this type of use.

Furthermore, to further protect the shearing device (7) from possible damage, the profiling line according to the present embodiment is provided with an auxiliary shearing device, e.g. a manually driven band saw, which can be used to cut the tail section of the pipe (P) in all cases in which it presents any imperfections such as, for example, no weld, or the presence of an incomplete weld, which could damage the cutting tools of the shearing device (7).

## Claims

1. A high-efficiency profiling line, comprising: a feeder device (2) followed by a joining device (22), predisposed to perform the end welding between the initial end of a new strip to be processed and the final end or tail end of a strip being processed; an accumulation section (23), arranged downstream of the joining device (22) and predisposed to accumulate a predetermined length of strip and to feed the strip at an adjustable speed; a forming assembly (3), arranged downstream of the feeder device (2), and comprising a plurality of forming assemblies structured to fold the strip (N) longitudinally into a pipe (P); a cutting device (4), arranged between the accumulation section (23) and the forming assembly (3), equipped with a mobile cutting head (41) structured to translate in synchrony with the strip (N) along an operative stroke, and to cut the strip (N) as it advances at a predetermined speed;
a welding device (5), arranged downstream of the forming assembly (3) and predisposed to perform a longitudinal weld of the edges of the strip (N);
a shearing device (7), arranged downstream of the welding device and predisposed to cut the pipe (P) into sections of predetermined length;
**characterised in that** it comprises one or more extracting devices (9), arranged upstream of and/or on board and/or downstream of the shearing device (7), each of which comprises at least one motorised roller (91) adapted to be placed in contact with the pipe (P) to push the pipe (P) forwards.

2. The profiling line according to claim 1, wherein the cutting head (41) is associated to a carriage which can travel parallel to the strip (N) in a forward and return stroke, and wherein the cut is made during a section of the forwards stroke during which the carriage travels at the same speed as the strip (N).

3. The profiling line according to claim 1, comprising: a first end sensor (6), arranged upstream of the welding device (5) and predisposed to detect the tail end of the strip (N); wherein the first sensor (6) is predisposed to send a signal when it detects the tail end of the strip (N) to a control module which is configured to, after a predetermined period of time, stop the welding device (5).

4. The profiling line according to claim 1, comprising: a calibrating section (10) arranged between the welding device (5) and the shearing device (7); a second end sensor (8), arranged upstream of the calibrating section (10) and predisposed to detect the tail end of the pipe (P); wherein the second sensor (8) is predisposed to send a signal when it detects the tail end of the pipe (P) to a control module which is configured to actuate the shearing device (7) to cut a tail section of fixed length of the pipe (P).

5. The profiling line according to claim 1, comprising an auxiliary shearing device (11) arranged upstream of the shearing device (7).

## Patentansprüche

1. Hochleistungs-Profilieranlage, umfassend: eine Zuführvorrichtung (2), gefolgt von einer Zusammenfügungsvorrichtung (22), die dazu eingerichtet ist, das Endschweißen zwischen dem Anfangsende eines neuen zu verarbeitenden Bandes und dem letzten Ende oder hinteren Ende eines zu verarbeitenden Bandes durchzuführen; ein Sammelteilstück (23), die stromabwärts der Zusammenfügungsvorrichtung (22) angeordnet ist und dazu eingerichtet ist, eine vorbestimmte Bandlänge zu sammeln und das Band mit einer einstellbaren Geschwindigkeit zuzuführen; eine Formgebungsanordnung (3), die stromabwärts der Zuführvorrichtung (2) angeordnet ist und eine Vielzahl von Formgebungsanordnungen umfasst, die dazu strukturiert sind, das Band (N) in Längsrichtung zu einem Rohr (P) zu falten; eine Schneidvorrichtung (4), die zwischen dem Sammelteilstück (23) und der Formgebungsanordnung (3) angeordnet ist und mit einem beweglichen Schneidkopf (41) ausgestattet ist, der dazu strukturiert ist, sich synchron mit dem Band (N) entlang eines Arbeitshubs zu verschieben und das Band (N) zu schneiden, wenn es sich mit einer vorbestimmten Geschwindigkeit bewegt;
eine Schweißvorrichtung (5), die stromabwärts der Formgebungsanordnung (3) angeordnet und dazu eingerichtet ist, eine Längsschweißung der Kanten des Bandes (N) durchzuführen;
eine Schervorrichtung (7), die stromabwärts der Schweißvorrichtung angeordnet und dazu eingerichtet ist, das Rohr (P) in Teilstücke vorbestimmter Länge zu schneiden;
**dadurch gekennzeichnet, dass** sie eine oder mehrere Extraktionsvorrichtungen (9) umfasst, die stromaufwärts und/oder an Bord und/oder stromabwärts der Schervorrichtung (7) angeordnet sind und von denen eine jede mindestens eine motorisierte Rolle (91) umfasst, die dazu ausgelegt ist, mit dem Rohr (P) in Kontakt gebracht zu werden, um das Rohr (P) vorwärts zu schieben.

2. Profilieranlage nach Anspruch 1, wobei der Schneidkopf (41) mit einem Schlitten assoziiert ist, der parallel zum Band (N) in einem Vorwärts- und Rückwärtshub verfahren kann, und wobei der Schnitt während eines Teilstücks des Vorwärtshubs durchgeführt wird, während dem der Schlitten mit der gleichen Geschwindigkeit wie das Band (N) verfahren wird.

3. Profilieranlage nach Anspruch 1, umfassend:
einen ersten Endsensor (6), der stromaufwärts der Schweißvorrichtung (5) angeordnet und eingerichtet ist, um das hintere Ende des Bandes (N) zu detektieren; wobei der erste Sensor (6) eingerichtet ist, um ein Signal zu senden, wenn er das hintere Ende des Bandes (N) an einem Steuermodul detektiert, das ausgelegt ist, um nach einer vorbestimmten Zeitspanne die Schweißvorrichtung (5) anzuhalten.

4. Profilieranlage nach Anspruch 1, umfassend: ein Kalibrierteilstück (10), das zwischen der Schweißvorrichtung (5) und der Schervorrichtung (7) angeordnet ist;
einen zweiten Endsensor (8), der stromaufwärts des Kalibrierteilstücks (10) angeordnet und eingerichtet ist, um das hintere Ende des Rohrs (P) zu detektieren; wobei der zweite Sensor (8) eingerichtet ist, um ein Signal zu senden, wenn er das hintere Ende des Rohrs (P) an einem Steuermodul detektiert, das ausgelegt ist, um die Schervorrichtung (7) zu betätigen, um ein hinteres Teilstück fixer Länge des Rohrs (P) zu schneiden.

5. Profilieranlage nach Anspruch 1, umfassend eine vor der Schervorrichtung (7) angeordnete Hilfsschervorrichtung (11).

## Revendications

1. Ligne de profilage à haut rendement, comprenant : un dispositif d'alimentation (2) suivi d'un dispositif d'assemblage (22), prédisposé pour effectuer la soudure d'extrémité entre l'extrémité initiale d'une nouvelle bande à traiter et l'extrémité finale ou l'extrémité de queue d'une bande en cours de traitement ; une section d'accumulation (23), disposée en aval du dispositif d'assemblage (22) et prédisposée pour accumuler une longueur prédéterminée de bande et pour alimenter la bande à une vitesse réglable ; un ensemble de formage (3), disposé en aval du dispositif d'alimentation (2), et comprenant une pluralité d'ensembles de formage structurés pour plier la bande (N) longitudinalement en un tube (P) ; un dispositif de coupe (4), disposé entre la section d'accumulation (23) et l'ensemble de formage (3), équipé d'une tête de coupe mobile (41) structurée pour translater de façon synchrone avec la bande (N) le long d'une course de travail, et pour couper la bande (N) lorsqu'elle avance à une vitesse prédéterminée ;
un dispositif de soudage (5) disposé en aval de l'ensemble de formage (3) et prédisposé pour effectuer une soudure longitudinale des bords de la bande (N) ;
un dispositif de cisaillement (7) disposé en aval du dispositif de soudage et prédisposé pour couper le tube (P) en sections de longueur prédéterminée ; **caractérisée en ce qu'**elle comprend un ou plusieurs dispositifs d'extraction (9), disposés en amont et/ou à bord et/ou en aval du dispositif de cisaillement (7), dont chacun comprend au moins un rouleau motorisé (91) adapté pour être placé en contact avec le tube (P) pour pousser le tube (P) vers l'avant.

2. Ligne de profilage selon la revendication 1, dans laquelle la tête de coupe (41) est associée à un chariot pouvant se déplacer parallèlement à la bande (N) dans une course de travail et de retour, et dans laquelle la coupe est effectuée pendant une section de la course de travail pendant laquelle le chariot se déplace à la même vitesse que la bande (N).

3. Ligne de profilage selon la revendication 1, comprenant :
un premier capteur d'extrémité (6) disposé en amont du dispositif de soudage (5) et prédisposé pour détecter l'extrémité de queue de la bande (N) ; dans lequel le premier capteur (6) est prédisposé pour envoyer un signal lorsqu'il détecte l'extrémité de queue de la bande (N) à un module de commande étant configuré pour, après une période de temps prédéterminée, arrêter le dispositif de soudage (5).

4. Ligne de profilage selon la revendication 1, comprenant : une section d'étalonnage (10) disposée entre le dispositif de soudage (5) et le dispositif de cisaillement (7) ;
un deuxième capteur d'extrémité (8) disposé en amont de la section de calibrage (10) et prédisposé pour détecter l'extrémité arrière du tube (P) ; dans laquelle le deuxième capteur (8) est prédisposé pour envoyer un signal lorsqu'il détecte l'extrémité de queue du tube (P) à un module de commande étant configuré pour actionner le dispositif de cisaillement (7) pour couper une section de queue de longueur fixe du tube (P).

5. Ligne de profilage selon la revendication 1, comprenant un dispositif de cisaillement (11) auxiliaire disposé en amont du dispositif de cisaillement (7).
